(19) Europäisches Patentamt
European Patent Office
Office européen des brevets

(11) **EP 2 487 454 B1**

(12) **EUROPEAN PATENT SPECIFICATION**

(45) Date of publication and mention
of the grant of the patent:
**19.12.2018 Bulletin 2018/51**

(51) Int Cl.:
***G01B 11/02*** *(2006.01)* ***B62D 15/02*** *(2006.01)*

(21) Application number: **12154632.9**

(22) Date of filing: **09.02.2012**

(54) **Vehicle length estimation**

Fahrzeuglängenschätzung

Estimation de longueur de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2011 SE 1150118**

(43) Date of publication of application:
**15.08.2012 Bulletin 2012/33**

(73) Proprietor: **Scania CV AB**
**151 87 Södertälje (SE)**

(72) Inventors:
• **Sandberg, Tony**
**645 44 Strängnäs (SE)**
• **Schauman, Henrik**
**168 69 Bromma (SE)**

(74) Representative: **Scania CV AB**
**Patents, GP 117kv**
**151 87 Södertälje (SE)**

(56) References cited:
**WO-A2-2010/020927 US-A- 5 523 947**

**Description**

Field of the invention

The present invention relates to a system and a method for determining the configuration of a moving vehicle, according to the preambles of the independent claims.

Background to the invention

The risk of accidents to heavy vehicles can be reduced by active safety systems. Various systems are based on models of the vehicle's behaviour. Control of the vehicle can be significantly improved by knowledge of parameters such as weight, centre of gravity and friction.

Availability of the maximum possible amount of vehicle information is important for the design of as good active safety systems as possible. Adding superstructures to vehicles and using vehicles to haul trailer combinations which the vehicle manufacturer was unaware of at the time of designing the vehicle leads to significant difficulties in achieving optimisation with regard, for example, to vehicle length, e.g. when configuring an emergency veering function. Solving this problem entails most parameters having to be estimated when the vehicle is in motion, since they may change from journey to journey.

US2009005932 and US5523947 describe methods for estimating a vehicle's pivot angle in order to enhance the stability of an active safety system. Cameras, radar or ultrasonic sensors etc. are only used to estimate the distance to the trailer's axle in order to be able to arrive at, for example, pivot angles and trailer width.

EP1726481 describes a distance-based system and method for assisting changes of traffic lane. A sensor is for example fastened to a vehicle's rearview mirror to reveal objects in adjacent lanes. The sensor's fastening angle is calibrated mechanically when the vehicle's length changes, resulting in a straight field of vision (in adjacent lanes). A calibration has to be done when the vehicle is stationary each time a trailer is coupled to/uncoupled from it.

WO2010020927 describes a sensor which uses radar to measure vehicle length. Sensors are fitted in the vehicle's rearview mirrors and therefore protrude from the vehicle at an angle which makes it possible to measure the vehicle's length continuously. However, the rearview mirrors and consequently the sensors are situated on a sprung cab which continually rocks and moves. In practice it is difficult for such a system to work with sufficient precision.

The object of the invention is to propose a robust system for estimating a vehicle's length and, in particular, for determining a vehicle's configuration.

Summary of the invention

The present invention provides a method as defined in claim 1, a computer program product as defined in claim 7, and an apparatus as defined in claim 9, which address the above-mentioned issues. The dependent claims further develop the idea of the present invention.

The vehicle reference point according to the invention is a point on the rearmost portion of the vehicle (or the forward portion of the vehicle, depending on the location of the detector unit), making it possible to determine the whole length of the vehicle, and wherein the detector unit is being suspended in the vehicle's chassis.

The invention affords the possibility of better control and more effective safety systems, due inter alia to the vehicle's length being determined. Information about trailer configurations and geometry is not programmed in the vehicle, with the result that control systems and safety systems cannot be fully optimised. The invention makes it possible to use a detector-based "blind spot" system with the consequent possibility of detecting the trailer at bends and using for example radar echoes as a basis for making an estimate of the vehicle's length and geometry.

Both the length of the vehicle combination and the angle between tractor unit and trailer may be used to optimise active safety systems such as assistance for lane holding and emergency veering. If the vehicle's length is known, other systems may use the information to provide early warnings if the trailer or trailers are about to follow such a trajectory as to cause danger to nearby vehicles or unprotected road users, e.g. cyclists or pedestrians.

The detector unit is fitted in the vehicle's chassis, with the respective detectors in line with the outside of the vehicle and therefore having no sight of the rear edge of the trailer until the vehicle pivots. Measurements are taken only when the vehicle pivots, and vehicle lengths are calculated by preferably using geometrical relationships.

Preferred embodiments are described in the dependent claims and the detailed description.

Brief description of the attached drawings

The invention is described below with reference to the attached drawings, in which:

Figure 1 describes a method according to the invention for determining the configuration of a moving vehicle.
Figure 2 illustrates schematically the various parameters used in the calculations.
Figure 3 depicts a system for determining the configuration of a moving vehicle according to an embodiment of the invention.

Detailed description of preferred embodiments of the invention

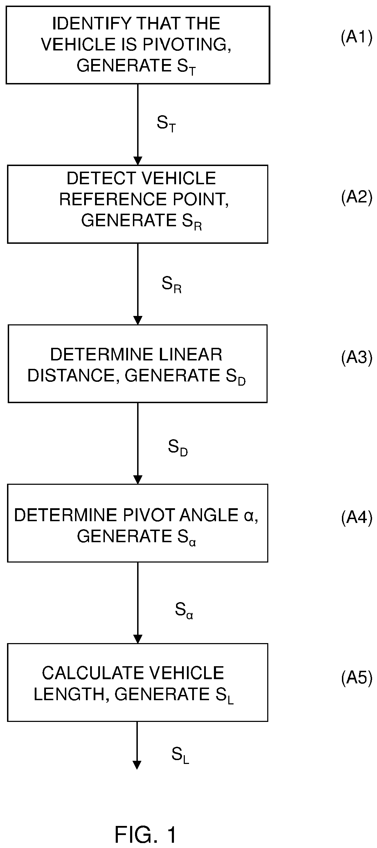

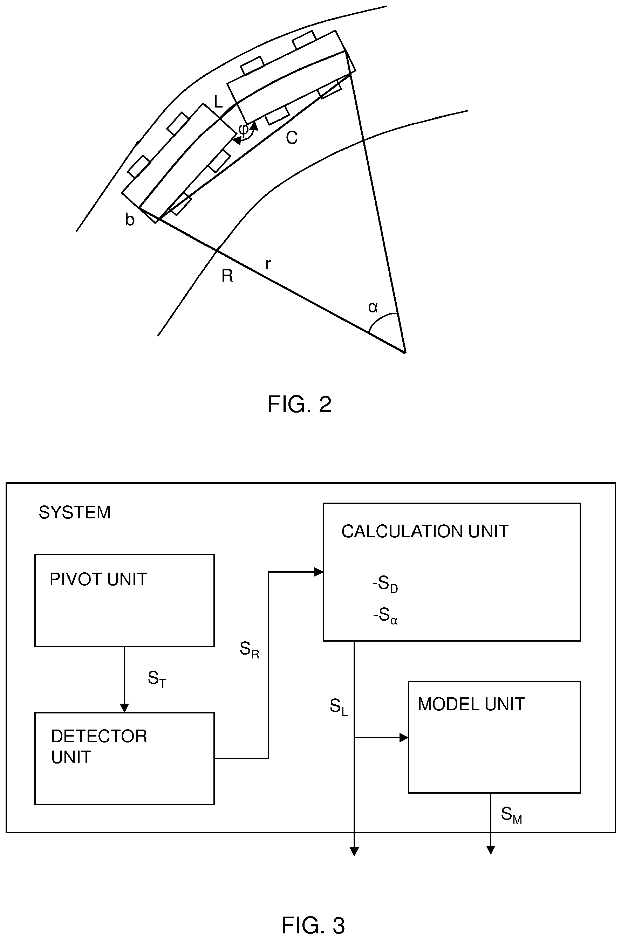

Figure 1 is a flowchart for the method according to the invention and will now be explained with reference to the diagrams. The term "vehicle" covers any vehicle, including any trailers coupled to it. The vehicle may for example comprise a tractor unit and one or more trailers, as illustrated in Figure 2. The method comprises a first step A1 of identifying when the vehicle pivots, and generating on the basis thereof a pivot signal $S_T$. By monitoring signals such as various wheel speeds, steering wheel angle, lateral acceleration and/or road markings it is possible to know when the vehicle pivots. As a second step A2, at least one vehicle reference point is detected by a detector unit situated on the vehicle when the vehicle pivots, and a reference signal $S_R$ is generated on the basis thereof. The vehicle reference point may for example be detected by means of radar, laser or cameras. The point will have the same velocity as the vehicle itself, making it possible to distinguish the vehicle from other objects. The point registered furthest away will be the rear end of the vehicle, which is the point used to determine, for example, the length of the whole vehicle. As a third step A3, a linear distance C (depicted in Figure 2) between said vehicle reference point and the detector unit is calculated on the basis of said reference signal $S_R$, and a distance signal $S_D$ is generated on the basis thereof. Thereafter, as a fourth step A4, a pivot angle $\alpha$ for the vehicle related to said vehicle reference point is determined and a pivot angle signal $S_\alpha$ is generated on the basis thereof. According to an embodiment, the vehicle's pivot angle $\alpha$ is determined on the basis of the rotation speed of its wheels by the equation:

$$R = \frac{W1 + W2}{W2 - W1} \cdot b \qquad (1)$$

in which W1 and W2 respectively denote the speed of the vehicle's wheels on the inside and outside of the bend in Figure 2. b denotes the vehicle's width, and since the inside and outside wheels rotate at different speeds on a bend, the radius R of the bend is determined as the radius to the vehicle's centreline.

The equation for the circle segment depicted in Figure 2 is

$$r = R - \frac{b}{2} \qquad (2)$$

in which r denotes the radius of the bend on the side of the vehicle where the detector unit is situated. Another equation which applies is

$$\sin\left(\alpha/2\right) = \frac{c/2}{r} \qquad (3)$$

in which $\alpha$ is the vehicle's pivot angle for the vehicle reference point detected and C is the linear distance detected between the vehicle reference point and the detector unit.

The method comprises a fifth step A5 of calculating a vehicle length based on at least said linear distance C and said pivot angle $\alpha$ when the vehicle pivots, and generating on the basis thereof a vehicle length signal $S_L$. The vehicle length may according to an embodiment be calculated by the relationship

$$L = \alpha \cdot R \qquad (4)$$

in which L is a vehicle length and also the arc length of the circle segment. The vehicle length signal $S_L$ may then be used in various systems in the vehicle which need its current length L. According to an embodiment, said vehicle length L is the total length of the vehicle.

The method may comprise detecting a plurality of vehicle reference points and pivot angles $\alpha$ pertaining to

respective said vehicle reference points when the vehicle combination pivots, calculating therefrom a plurality of vehicle lengths which indicate the vehicle's configuration, and generating at least one vehicle length signal $S_L$ which indicates said lengths of the vehicle. The detector unit may for example also detect the breaking point for the vehicle (the point where the vehicle deflects on a bend) and may use this information to calculate the length of its one or more trailers.

Figure 2 depicts also an angle φ between two portions of the vehicle when they are pivoting. The method comprises according to an embodiment detecting a plurality of vehicle reference points along the vehicle when the vehicle pivots and determining on the basis of them a straight line along the vehicle's side. With reference to Figure 2 depicting a tractor unit and a trailer, it is possible to use radar, lasers or cameras to detect a number of points on the trailer, which has the same velocity as the tractor unit. The point furthest away will be the rear end of the trailer and can be used in conjunction with various other points along the side of the trailer to form a line which represents the side of the trailer. The detector unit will report that these points all have the same angle φ. The number of points used may be increased for greater confidence. The angle φ between portions of the vehicle is thus determined on the basis of at least said straight line and is then used to determine the vehicle's configuration. The angle φ may also be used by other systems in the vehicle to see if for example there is risk of the vehicle crossing the road marking lines if it continues its current trajectory.

To determine the vehicle's configuration the method according to an embodiment comprises comparing at least one length calculated for the vehicle with length information for various vehicle models. The model or models which the vehicle comprises are identified on the basis of the comparison, and at least one model signal which indicates said model or models is generated. It is thus possible to derive more information about the vehicle on the sole basis of knowing its length and any other parameters of it which are already known, e.g. its width and weight.

The invention comprises a computer programme product comprising programme instructions for enabling a computer system in a vehicle to perform steps according to the method described when those instructions are run on said computer system. The computer programme instructions are stored, according to an embodiment, on a medium which can be read by a computer system.

Figure 3 illustrates a system according to the invention for determining the configuration of a moving vehicle. The system comprises a pivot unit adapted to identifying when the vehicle pivots and to generating on the basis thereof a pivot signal $S_T$. Monitoring for example wheel speeds, steering wheel angle, lateral acceleration and/or road markings makes it possible to know when the vehicle pivots, and the pivot unit is preferably adapted to a establishing that the vehicle is pivoting on the basis of one or more parameters. Wheel speeds may for example be detected by speed sensors on the wheelshafts and are usually known parameters within the vehicle. The steering wheel's deflection angle is usually also a known parameter, and another is lateral acceleration, which may be detected by acceleration sensors. Road markings may for example be detected by using a detector unit with cameras directed forwards which can assess whether road markings identified indicate that the road is bending. A combination of one or more of these calculated parameters is of course possible for more safely identifying that the vehicle is pivoting.

The system further comprises a detector unit situated on the vehicle and adapted to detecting at least one vehicle reference point when the vehicle pivots, and to generating on the basis thereof a reference signal $S_R$. The vehicle reference point is therefore not detected until the vehicle pivots and the detector unit receives a pivot signal $S_T$ which so indicates. The detector unit is adapted to being suspended in the vehicle's chassis, e.g. in the boarding step on a truck. The fact that the detector unit is fastened to the vehicle's chassis means that it is not affected by, for example, vibrations from a sprung cab and that the system can therefore provide more robust and safer determinations of the vehicle's configuration. The detector unit may therefore, as previously described, be situated in the forward portion of the vehicle but may instead be situated in the rear portion of the vehicle for detection of vehicle reference points in the forward portion of the vehicle. The detector unit may further comprise a camera unit and/or radar unit and/or laser unit for determination of vehicle reference points, and may be part of an existing so-called "blind spot" system which commonly monitors adjacent traffic lanes. At bends, the trailer will form an angle relative to the tractor unit and thereby enter the field of vision of the chassis-mounted "blind spot" system. According to an embodiment, the pivot unit and the detector unit are one and the same unit.

The vehicle reference point according to the invention is a point on the rearmost portion of the vehicle (or the forward portion of the vehicle, depending on the location of the detector unit), making it possible to determine the whole length of the vehicle. According to another embodiment, wheels may be detected by means of object detection when there is a speed difference between the tyres and the trailer. The system further comprises a calculation unit adapted to determining on the basis of said reference signal a linear distance C between said vehicle reference point and the detector unit and to generating on the basis thereof a distance signal $S_D$. This distance C is illustrated in Figure 2. The calculation unit is further adapted to determining for the vehicle a pivot angle α related to said vehicle reference point, and to generating on the basis thereof a pivot angle signal $S_\alpha$. The calculation unit is adapted, according to an embodiment, to determining the vehicle's pivot angle α on the basis of the rotation speed of its wheels, as expressed in equation (1). The calculation unit is also adapted to calculating a vehicle length L based on at least said linear distance and pivot angle when the vehicle pivots, and to generating on the basis thereof a vehicle length signal $S_L$. An example of how α and L may be calculated is expressed by equations (2) to (4). It is thus possible to determine, for example, the total length of the vehicle.

The detector unit may also be adapted to detecting a plurality of vehicle reference points along the vehicle when the vehicle pivots, to which end the calculation unit is adapted to determining pivot angles $\alpha$ for respective said vehicle reference points when the vehicle pivots, and to calculating therefrom a plurality of vehicle lengths which indicate the vehicle's configuration, and to generating at least one vehicle length signal $S_L$ which indicates said lengths of the vehicle.

According to an embodiment, the calculation unit is adapted to determining a straight line along the side of the vehicle on the basis of said vehicle reference points and to determining an angle $\varphi$ between portions of the vehicle on the basis of at least said straight line, which angle $\varphi$ is used for determining the vehicle's configuration. A safer determination of the vehicle's configuration is thus achievable.

The system may also comprise a model unit containing information about different vehicle models. The model unit is adapted to comparing at least one length calculated for the vehicle with length information for different vehicle models, to identifying on the basis of the comparison the model or models which the vehicle comprises and to generating at least one model signal $S_M$ which indicates said model or models. Information about various permitted vehicle models within the EU is for example to be found through EU Directive 96/53 which gives information about maximum length for trailers, intermediate spaces between trailers and tractor units etc., and also information about maximum weight and axle configuration related to vehicle length. This information may thus be present in the model unit for comparison purposes. On the basis of the length of the vehicle, it is then possible to ascertain its axle configuration and also the vehicle's maximum permissible weight. The model signal may for example be used by other systems in the vehicle in order to arrive at safer calculations.

The present invention is not restricted to the embodiments described above. Various alternatives, modifications and equivalents may be used. The aforesaid embodiments therefore do not limit the invention's scope which is defined by the attached claims.

## Claims

1. A method for determining the whole length of a moving vehicle, which method comprises:

    - identifying (A1) when the vehicle pivots, and generating (A1) on the basis thereof a pivot signal $S_T$;
    - detecting (A2) at least one vehicle reference point by means of a detector unit situated on the vehicle when the vehicle pivots, and generating (A2) on the basis thereof a reference signal $S_R$; wherein said vehicle reference point is a point on the rearmost portion or in the foremost portion of the vehicle and wherein said detector unit is being suspended in the vehicle's chassis;
    - determining (A3) on the basis of said reference signal a linear distance between said vehicle reference point and the detector unit, and generating (A3) on the basis thereof a distance signal $S_D$;
    - determining (A4) for the vehicle a pivot angle $\alpha$ related to said vehicle reference point, and generating (A4) on the basis thereof a pivot angle $S_\alpha$;
    - calculating (A5) the whole vehicle length on the basis of at least said linear distance and said pivot angle when the vehicle pivots, and generating (A5) on the basis thereof a whole vehicle length signal $S_L$.

2. A method according to claim 1 which comprises determining the vehicle's pivot angle $\alpha$ on the basis of the rotation speed of its wheels.

3. A method according to claim 1 or 2 which comprises detecting a plurality of vehicle reference points and pivot angles $\alpha$ pertaining to respective said vehicle reference points when the vehicle combination pivots, calculating on the basis thereof a plurality of vehicle lengths which indicate the vehicle's configuration, and generating at least one vehicle length signal which indicates said length of the vehicle.

4. A method according to any one of the foregoing claims which comprises detecting a plurality of vehicle reference points along the vehicle when the vehicle pivots, determining a straight line along the side of the vehicle on the basis of said vehicle reference points, and determining on the basis of at least said straight line an angle $\varphi$ between portions of the vehicle, which angle is used for determining the whole vehicle length.

5. A method according to any one of the foregoing claims which comprises comparing at least one length calculated for the vehicle with length information for different vehicle models, identifying on the basis of the comparison the model or models which the vehicle comprises, and generating at least one model signal which indicates said model or models.

6. A method according to any one of the foregoing claims, in which said vehicle length is the total length of the vehicle.

7. A computer programme product comprising programme instructions for enabling a system according to claim 9 to perform steps according to the method of any of claims 1 to 6.

8. A computer programme product according to claim 7, in which the programme instructions are stored on a medium which can be read by a computer system.

9. A system for determining the whole length of a moving vehicle, which system comprises:

- a pivot unit adapted to identifying (A1) when the vehicle pivots, and to generating (A1) on the basis thereof a pivot signal $S_T$;
- a detector unit situated on the vehicle and adapted to detecting (A2) at least one vehicle reference point by means of a detector unit situated on the vehicle when the vehicle pivots, and to generating (A2) on the basis thereof a reference signal $S_R$; wherein said vehicle reference point is a point on the rearmost portion or in the foremost portion of the vehicle and wherein said detector unit is adapted to being suspended in the vehicle's chassis;- a calculation unit adapted to:

- determining (A3) on the basis of said reference signal a linear distance between said vehicle reference point and the detector unit, and generating (A3) on the basis thereof a distance signal $S_D$;
- determining (A4) for the vehicle a pivot angle $\alpha$ related to said vehicle reference point, and generating (A4) on the basis thereof a pivot angle $S_\alpha$;
- calculating (A5) the whole vehicle length on the basis of at least said linear distance and pivot angle when the vehicle pivots, and generating (A5) on the basis thereof a whole vehicle length signal $S_L$.

10. A system according to claim 9, in which the calculation unit is adapted to determining the vehicle's pivot angle $\alpha$ on the basis of the rotation speed of its wheels.

11. A system according to claim 9 or 10 in which the detector unit is adapted to detecting a plurality of vehicle reference points along the vehicle when the vehicle combination pivots, whereupon the calculation unit is adapted to determining pivot angles $\alpha$ for respective said vehicle reference points, calculating on the basis thereof a plurality of vehicle lengths which indicate the vehicle's configuration, and generating at least one vehicle length signal $S_L$ which indicates said length of the vehicle.

12. A system according to any one of claims 9 to 11, in which the detector unit is adapted to detecting a plurality of vehicle reference points along the vehicle when the vehicle pivots, whereupon the calculation unit is adapted to determining a straight line along the side of the vehicle on the basis of said vehicle reference points, and determining on the basis of at least said straight line an angle $\varphi$ between portions of the vehicle, which angle is used for determining the whole vehicle length.

13. A system according to any one of claims 9 to 12 comprising a model unit which contains information about different vehicle models and is adapted to comparing at least one length calculated for the vehicle with length information for different vehicle models, identifying on the basis of the comparison the model or models which the vehicle comprises, and generating at least one model signal $S_M$ which indicates said model or models.

14. A system according to any one of claims 9 to 13 in which said vehicle length is the total length of the vehicle.

15. A system according to any one of claims 9 to 14, in which said pivot unit is adapted to establishing that the vehicle is pivoting, on the basis of one or more from among different wheel speeds, steering wheel angle, lateral acceleration and road markings.

16. A system according to any one of claims 9 to 15, in which said detector unit comprises a camera unit and/or radar unit and/or laser unit.

17. A system according to any one of claims 9 to 16, in which said detector unit is situated in the forward portion of the vehicle.

18. A system according to any one of claims 9 to 16, in which said detector unit is situated in the rear portion of the vehicle.

**Patentansprüche**

1. Verfahren zum Bestimmen der Gesamtlänge eines fahrenden Fahrzeugs, wobei das Verfahren umfasst:

   - Identifizieren (A1), wann das Fahrzeug ausschwenkt, und Erzeugen (A1) eines Ausschwenksignals $S_T$ auf der Basis davon;
   - Erfassen (A2) von mindestens einem Fahrzeugreferenzpunkt mithilfe einer sich an dem Fahrzeug befindenden Detektoreinheit, wenn das Fahrzeug ausschwenkt, und Erzeugen (A2) eines Referenzsignals $S_R$ auf der Basis davon; wobei der Fahrzeugreferenzpunkt ein Punkt an dem hintersten Abschnitt oder in dem vordersten Abschnitt des Fahrzeugs liegt und wobei die Detektoreinheit in der Karosserie des Fahrzeugs aufgehängt ist;
   - Bestimmen (A3) eines linearen Abstands zwischen dem Fahrzeugreferenzpunkt und der Detektoreinheit auf der Basis des Referenzsignals und Erzeugen (A3) eines Abstandssignals $S_D$ auf der Basis davon;
   - Bestimmen (A4) eines Ausschwenkwinkels $\alpha$ bezogen auf den Fahrzeugreferenzpunkt für das Fahrzeug und Erzeugen (A4) eines Ausschwenkwinkels $S\alpha$ auf der Basis davon;
   - Berechnen (A5) der Gesamtfahrzeuglänge auf der Basis von mindestens dem linearen Abstand und dem Ausschwenkwinkel, wenn das Fahrzeug ausschwenkt, und Erzeugen (A5) eines Gesamtfahrzeuglängensignals $S_L$ auf der Basis davon.

2. Verfahren nach Anspruch 1, das das Bestimmen des Ausschwenkwinkels $\alpha$ des Fahrzeugs auf der Basis der Rotationsgeschwindigkeit seiner Räder umfasst.

3. Verfahren nach Anspruch 1 oder 2, das das Erfassen einer Vielzahl von Fahrzeugreferenzpunkten und zu den jeweiligen Fahrzeugreferenzpunkten gehörenden Ausschwenkwinkeln $\alpha$, wenn die Fahrzeugkombination ausschwenkt, das Berechnen einer Vielzahl von Fahrzeuglängen, die die Fahrzeugauslegung anzeigen, auf der Basis davon und das Erzeugen von mindestens einem Fahrzeuglängensignal, das die Länge des Fahrzeugs anzeigt, umfasst.

4. Verfahren nach einem der vorhergehenden Ansprüche, das das Erfassen einer Vielzahl von Fahrzeugreferenzpunkten entlang des Fahrzeugs, wenn das Fahrzeug ausschwenkt, das Bestimmen einer geraden Linie entlang der Seite des Fahrzeugs auf der Basis der Fahrzeugreferenzpunkte und das Bestimmen auf der Basis der mindestens geraden Linie eines Winkels $\phi$ zwischen Abschnitten des Fahrzeugs umfasst, wobei der Winkel zum Bestimmen der Gesamtfahrzeuglänge genutzt wird.

5. Verfahren nach einem der vorhergehenden Ansprüche, das das Vergleichen von mindestens einer für das Fahrzeug berechneten Länge mit einer Längeninformation für verschiedene Fahrzeugmodelle, das Identifizieren auf der Basis des Vergleichs des Modells oder der Modelle, die das Fahrzeug umfasst, und das Erzeugen von mindestens einem Modellsignal, das das Modell oder die Modelle anzeigt, umfasst.

6. Verfahren nach einem der vorhergehenden Ansprüche, bei dem die Fahrzeuglänge die Gesamtlänge des Fahrzeugs ist.

7. Computerprogrammprodukt, umfassend Programmanweisungen, um zu ermöglichen, dass ein System nach Anspruch 9 die Schritte gemäß dem Verfahren nach einem der Ansprüche 1 bis 6 durchführt.

8. Computerprogrammprodukt nach Anspruch 7, bei dem Programmanweisungen auf einem Medium gespeichert sind, das von einem Computersystem gelesen werden kann.

9. System zum Bestimmen der Gesamtlänge eines fahrenden Fahrzeugs, wobei das System umfasst:

   - eine Ausschwenkeinheit, die dazu angepasst ist, zu identifizieren (A1), wann das Fahrzeug ausschwenkt, und auf der Basis davon ein Ausschwenksignal $S_T$ zu erzeugen (A1);
   - eine Detektoreinheit, die sich an dem Fahrzeug befindet und dazu angepasst ist, mindestens einen Fahrzeugreferenzpunkt mithilfe einer sich an dem Fahrzeug befindenden Detektoreinheit zu erfassen (A2), wenn das Fahrzeug ausschwenkt, und ein Referenzsignal $S_R$ auf der Basis davon zu erzeugen (A2); wobei der Fahrzeugreferenzpunkt ein Punkt an dem hintersten Abschnitt oder in dem vordersten Abschnitt des Fahrzeugs ist und wobei die Detektoreinheit dazu angepasst ist, in der Karosserie des Fahrzeugs aufgehängt zu sein;
- eine Berechnungseinheit, die dazu angepasst ist:

  - auf der Basis des Referenzsignals einen linearen Abstand zwischen dem Fahrzeugreferenzpunkt und der Detektoreinheit zu bestimmen (A3) und ein Abstandssignal $S_D$ auf der Basis davon zu erzeugen (A3);
  - einen Ausschwenkwinkel $\alpha$ bezogen auf den Fahrzeugreferenzpunkt für das Fahrzeug zu bestimmen (A4) und Erzeugen (A4) eines Ausschwenkwinkels $S\alpha$ auf der Basis davon;
  - die Gesamtfahrzeuglänge auf der Basis von mindestens dem linearen Abstand und dem Ausschwenkwinkel zu berechnen, wenn das Fahrzeug ausschwenkt, und ein Gesamtfahrzeuglängensignal $S_L$ auf der Basis davon zu erzeugen (A5).

10. System nach Anspruch 9, in dem die Berechnungseinheit dazu angepasst ist, den Ausschwenkwinkel $\alpha$ des Fahrzeugs auf der Basis der Rotationsgeschwindigkeit seiner Räder zu bestimmen.

11. System nach Anspruch 9 oder 10, in dem die Detektoreinheit dazu angepasst ist, eine Vielzahl von Fahrzeugreferenzpunkten entlang des Fahrzeugs zu erfassen, wenn die Fahrzeugkombination ausschwenkt, wobei die Berechnungseinheit dazu angepasst ist, Ausschwenkwinkel $\alpha$ für die jeweiligen Fahrzeugreferenzpunkte zu bestimmen, auf der Basis davon eine Vielzahl von Fahrzeuglängen zu berechnen, die die Fahrzeugauslegung anzeigen, und mindestens ein Fahrzeuglängensignal $S_L$ zu erzeugen, das die Länge des Fahrzeugs anzeigt.

12. System nach einem der Ansprüche 9 bis 11, in dem die Detektoreinheit dazu angepasst ist, eine Vielzahl von Fahrzeugreferenzpunkten entlang des Fahrzeugs zu erfassen, wenn das Fahrzeug ausschwenkt, wobei die Berechnungseinheit dazu angepasst ist, eine gerade Linie entlang der Seite des Fahrzeugs auf der Basis der Fahrzeugreferenzpunkte zu bestimmen und auf der Basis der mindestens geraden Linie einen Winkel $\phi$ zwischen Abschnitten des Fahrzeugs zu bestimmen, wobei der Winkel zum Bestimmen der Gesamtfahrzeuglänge genutzt wird.

13. System nach einem der Ansprüche 9 bis 12, umfassend eine Modelleinheit, die eine Information zu verschiedenen Fahrzeugmodellen enthält und dazu angepasst ist, mindestens eine für das Fahrzeug berechnete Länge mit einer Längeninformation für verschiedene Fahrzeugmodelle zu vergleichen, auf der Basis des Vergleichs das Modell oder die Modelle, die das Fahrzeug umfasst, zu identifizieren und mindestens ein Modellsignal $S_M$, das das Modell oder die Modelle anzeigt, zu erzeugen.

14. System nach einem der Ansprüche 9 bis 13, in dem die Fahrzeuglänge die Gesamtlänge des Fahrzeugs ist.

15. System nach einem der Ansprüche 9 bis 14, in dem die Ausschwenkeinheit dazu angepasst ist, auf der Basis von einem oder mehr von verschiedenen Radgeschwindigkeiten, Lenkradwinkel, Seitenbeschleunigung und Straßenmarkierungen festzustellen, dass das Fahrzeug ausschwenkt.

16. System nach einem der Ansprüche 9 bis 15, in dem die Detektoreinheit eine Kameraeinheit und/oder Radareinheit und/oder Lasereinheit umfasst.

17. System nach einem der Ansprüche 9 bis 16, in dem sich die Detektoreinheit im vorderen Abschnitt des Fahrzeugs befindet.

18. System nach einem der Ansprüche 9 bis 16, in dem sich die Detektoreinheit im hinteren Abschnitt des Fahrzeugs befindet.

## Revendications

1. Procédé visant à déterminer la longueur totale d'un véhicule en mouvement, le procédé comprenant :

   - l'identification (A1) du moment de pivotement de véhicule et la génération (A1) sur la base de celui-ci d'un signal de pivotement $S_T$ ;
   - la détection (A2) d'au moins un point de référence de véhicule au moyen d'une unité de détection située sur le véhicule lorsque le véhicule pivote, et la génération (A2) sur la base de celui-ci d'un signal de référence $S_R$ ;

ledit point de référence de véhicule étant un point situé sur la partie la plus en arrière ou dans la partie la plus en avant du véhicule et ladite unité de détection étant suspendue dans le châssis du véhicule ;
- la détermination (A3) sur la base dudit signal de référence d'une distance linéaire entre ledit point de référence de véhicule et l'unité de détection, et la génération (A3) sur la base de celle-ci d'un signal de distance $S_D$ ;
- la détermination (A4) pour le véhicule d'un angle de pivotement a en rapport avec ledit point de référence de véhicule, et la génération (A4) sur la base de celui-ci d'un angle de pivotement $S_\alpha$;
- le calcul (A5) de la longueur totale du véhicule sur la base d'au moins ladite distance linéaire et ledit angle de pivotement lorsque le véhicule pivote, et la génération (A5) sur la base de ceux-ci d'un signal de longueur totale de véhicule $S_L$.

2. Procédé selon la revendication 1 qui comprend la détermination de l'angle de pivotement a du véhicule sur la base de la vitesse de rotation de ses roues.

3. Procédé selon la revendication 1 ou 2 qui comprend la détection d'une pluralité de points de référence et d'angles de pivotement a du véhicule se rapportant auxdits points de référence de véhicule respectifs lorsque la combinaison de véhicule pivote, le calcul, sur la base de ceux-ci, d'une pluralité de longueurs de véhicule qui indiquent la configuration du véhicule, et la génération d'au moins un signal de longueur du véhicule qui indique ladite longueur du véhicule.

4. Procédé selon l'une quelconque des revendications précédentes, qui comprend la détection d'une pluralité de points de référence de véhicule le long du véhicule lorsque le véhicule pivote, la détermination d'une ligne droite le long du côté du véhicule sur la base desdits points de référence de véhicule, et la détermination sur la base d'au moins ladite ligne droite d'un angle $\varphi$ entre des parties du véhicule, lequel angle est utilisé pour déterminer la longueur totale de véhicule.

5. Procédé selon l'une quelconque des revendications précédentes, qui comprend la comparaison d'au moins une longueur calculée pour le véhicule à des informations de longueur pour différents modèles de véhicules, l'identification sur la base de la comparaison de l'au moins un modèle compris par le véhicule, et la génération d'au moins un signal de modèle qui indique ledit au moins un modèle.

6. Procédé selon l'une quelconque des revendications précédentes, dans lequel ladite longueur de véhicule est la longueur totale du véhicule.

7. Produit de programme informatique comprenant des instructions de programme pour permettre à un système selon la revendication 9 d'exécuter des étapes selon le procédé de l'une quelconque des revendications 1 à 6.

8. Produit de programme informatique selon la revendication 7, dans lequel les instructions de programme sont stockées sur un support qui peut être lu par un système informatique.

9. Système visant à déterminer la longueur totale d'un véhicule en mouvement, le système comprenant :

- une unité de pivotement adaptée pour l'identification (A1) du moment de pivotement du véhicule et la génération (A1) sur la base de celui-ci d'un signal de pivotement $S_T$ ;
- une unité de détection située sur le véhicule et adaptée pour la détection (A2) d'au moins un point de référence de véhicule au moyen d'une unité de détection située sur le véhicule lorsque le véhicule pivote, et la génération (A2) sur la base de celui-ci d'un signal de référence $S_R$ ;
ledit point de référence de véhicule étant un point situé sur la partie la plus en arrière ou dans la partie la plus en avant du véhicule et ladite unité de détection étant suspendue dans le châssis du véhicule ; - une unité de calcul adaptée pour :

- la détermination (A3) sur la base dudit signal de référence d'une distance linéaire entre ledit point de référence du véhicule et l'unité de détection, et génération (A3) sur la base de celui-ci d'un signal de distance S D ;
- la détermination (A4) pour le véhicule d'un angle de pivotement a en rapport avec ledit point de référence de véhicule, et la génération (A4) sur la base de celui-ci d'un angle de pivotement $S_\alpha$;
- le calcul (A5) de la longueur totale de véhicule sur la base d'au moins ladite distance linéaire et ledit angle de pivotement lorsque le véhicule pivote, et la génération (A5) sur la base de ceux-ci d'un signal de longueur totale de véhicule $S_L$.

**10.** Système selon la revendication 9, dans lequel l'unité de calcul est adaptée pour la détermination de l'angle de pivotement a du véhicule sur la base de la vitesse de rotation de ses roues.

**11.** Système selon la revendication 9 ou 10, dans lequel l'unité de détection est adaptée pour la détection d'une pluralité de points de référence de véhicule le long du véhicule lorsque la combinaison de véhicule pivote, après quoi l'unité de calcul est adaptée pour la détermination d'angles de pivotement a pour lesdits points de référence de véhicule respectifs, le calcul, sur la base de ceux-ci, d'une pluralité de longueurs de véhicule qui indiquent la configuration du véhicule, et la génération d'au moins un signal $S_L$ de longueur de véhicule qui indique ladite longueur du véhicule.

**12.** Système selon l'une quelconque des revendications 9 à 11, dans lequel l'unité de détection est adaptée pour la détection d'une pluralité de points de référence de véhicule le long du véhicule lorsque le véhicule pivote, après quoi l'unité de calcul est adaptée pour la détermination d'une ligne droite le long du côté du véhicule sur la base desdits points de référence de véhicule, et la détermination sur la base d'au moins ladite ligne droite d'un angle $\varphi$ entre des parties du véhicule, lequel angle est utilisé pour déterminer la longueur totale de véhicule.

**13.** Système selon l'une quelconque des revendications 9 à 12, comprenant une unité modèle qui contient des informations sur différents modèles de véhicules et est adaptée pour la comparaison d'au moins une longueur calculée pour le véhicule à des informations de longueur pour différents modèles de véhicules, l'identification sur la base de la comparaison de l'au moins un modèle compris par le véhicule, et la génération d'au moins un signal de modèle $S_M$ qui indique ledit au moins un modèle.

**14.** Système selon l'une quelconque des revendications 9 à 13 dans lequel ladite longueur de véhicule est la longueur totale du véhicule.

**15.** Système selon l'une quelconque des revendications 9 à 14, dans lequel ladite unité de pivotement est adaptée pour l'établissement du fait que le véhicule pivote, sur la base d'au moins un élément parmi des vitesses de roue, des angles de braquage, une accélération latérale et des marquages routiers différents.

**16.** Système selon l'une quelconque des revendications 9 à 15, dans lequel ladite unité de détection comprend une unité de caméra et/ou une unité de radar et/ou une unité de laser.

**17.** Système selon l'une quelconque des revendications 9 à 16, dans lequel ladite unité de détection est située dans la partie avant du véhicule.

**18.** Système selon l'une quelconque des revendications 9 à 16, dans lequel ladite unité de détection est située dans la partie arrière du véhicule.

```
┌─────────────────────────┐
│   IDENTIFY THAT THE      │
│   VEHICLE IS PIVOTING,   │        (A1)
│   GENERATE S_T           │
└─────────────────────────┘
            │
            │ S_T
            ▼
┌─────────────────────────┐
│   DETECT VEHICLE         │
│   REFERENCE POINT,       │        (A2)
│   GENERATE S_R           │
└─────────────────────────┘
            │
            │ S_R
            ▼
┌─────────────────────────┐
│   DETERMINE LINEAR       │
│   DISTANCE, GENERATE S_D │        (A3)
└─────────────────────────┘
            │
            │ S_D
            ▼
┌─────────────────────────┐
│ DETERMINE PIVOT ANGLE α, │
│   GENERATE S_α           │        (A4)
└─────────────────────────┘
            │
            │ S_α
            ▼
┌─────────────────────────┐
│   CALCULATE VEHICLE      │
│   LENGTH, GENERATE S_L   │        (A5)
└─────────────────────────┘
            │
            │ S_L
            ▼
```

FIG. 1

FIG. 2

FIG. 3

## REFERENCES CITED IN THE DESCRIPTION

**Patent documents cited in the description**

- US 2009005932 A
- US 5523947 A
- EP 1726481 A
- WO 2010020927 A